# EUROPÄISCHE PATENTSCHRIFT

(11) **EP 3 749 869 B1**
(45) Veröffentlichungstag und Bekanntmachung des Hinweises auf die Patenterteilung: **04.08.2021**
(21) Anmeldenummer: 19703664.3
(22) Anmeldetag: 01.02.2019
(51) Int. Cl.: F16C 17/03, F16C 17/06, F16C 32/06, F16C 33/30, F16C 21/00

(54) **LAGERANORDNUNG MIT SELBSTSTELLENDEN UND STÖRUNGSUNEMPFINDLICHEN KRAFTELEMENTEN**
BEARING ARRANGEMENT WITH SELF-ADJUSTING FORCE ELEMENTS WHICH ARE RESISTANT TO MALFUNCTIONING
ENSEMBLE PALIER COMPORTANT DES ÉLÉMENTS DE FORCE A RÉGLAGE AUTOMATIQUE ET INSENSIBLES AUX PERTURBATIONS

(30) Priorität: 06.02.2018 DE 102018201845
(43) Veröffentlichungstag der Anmeldung: 16.12.2020
(73) Patentinhaber: thyssenkrupp rothe erde Germany GmbH, 44137 Dortmund (DE); thyssenkrupp AG, 45143 Essen (DE)
(72) Erfinder: LÜNEBURG, Bernd, 45481 Mülheim (DE); ROLLMANN, Jörg, 59558 Lippstadt (DE); ELFERT, Gunther, 59597 Erwitte (DE)
(74) Vertreter: thyssenkrupp Intellectual Property GmbH
(86) Internationale Anmeldenummer: PCT/EP2019/052526
(87) Internationale Veröffentlichungsnummer: WO 2019/154735

(56) Entgegenhaltungen:
- EP-A1- 0 023 657
- WO-A1-2004/038096
- CH-A5- 606 793
- DE-A1- 3 221 277
- US-A- 3 782 793
- US-A1- 2008 013 060
- US-B1- 6 337 484

## Beschreibung

### Stand der Technik

Die vorliegende Erfindung betrifft eine Lageranordnung mit einem ersten Lagerring und einem drehbar gegenüber dem ersten Lagerring gelagerten zweiten Lagerring, wobei an dem ersten Lagerring eine Mehrzahl von hydrostatisch abgestützten Gleitlagersegmenten angeordnet ist, wobei jedes Gleitlagersegment mit einer am zweiten Lagerring angeordneten ersten Gleitfläche zusammenwirkt.

Derartige Lageranordnungen sind in vielfältigen Formen aus dem Stand der Technik bekannt. Die Gleitlagersegmente übertragen dabei eine Kraft zwischen den beiden Lagerringen, wobei die Kraftübertragung entweder ausschließlich über die Gleitelemente stattfinden kann oder im Falle einer hybriden Bauform teilweise durch zusätzliche Wälzkörper geleistet wird. Um eine reibungsarme, möglichst verschleißfreie Bewegung zu erreichen, muss dabei ein direkter mechanischer Kontakt zwischen den gegeneinander gleitenden Flächen vermieden werden. Zu diesem Zweck ist der Raum zwischen den beiden Gleitflächen mit einem fluiden Medium gefüllt, das die Kraft zwischen den Kontaktpartnern überträgt. Bei dem fluiden Medium handelt es sich in der Regel um einen flüssigen Schmierstoff oder in selteneren Fällen um ein Gas wie beispielsweise Luft.

Um unter Belastung eine Trennung der Kontaktpartner zu erreichen, muss das Medium einen ausreichend großen hydrostatischen Druck aufweisen. Die Flüssigkeit oder das Gas wird dazu unter Druck zwischen die Gleitflächen gepumpt. Die dafür von der Pumpe aufgebrachte Leistung ist im Wesentlichen durch das Produkt aus Volumenstrom und Druck gegeben, so dass bei einer vorgegebenen Pumpleistung bei einer hohen Durchflussrate der dabei aufrecht erhaltene Druck entsprechend gering wird. Der Volumenstrom ist wiederum durch die Größe des Spalts bestimmt, durch den das Medium gepresst wird. Dabei geht die Spaltweite mit der dritten Potenz ein, so dass das Aufrechterhalten des Drucks bei großen Spaltweiten eine sehr hohe Pumpleistung erfordert. Daher ist es von entscheidender Bedeutung, die Spaltweiten zwischen den Gleitflächen so gering wie möglich zu halten. Besonders bei großen Lagern führen jedoch die belastungsbedingten Verformungen und Schiefstellungen bereits zu Abständen der Kontaktpartner, die im Millimeterbereich liegen und damit um Größenordnungen über den Spaltweiten liegen, die sich technisch mittels hydrostatischer Wirkprinzipien realisieren lassen.

Aus dem Stand der Technik sind verschiedene Möglichkeiten bekannt, Gleitlagerelemente flexibel gegenüber belastungsbedingten Lageänderungen zu gestalten.

Aus US 3 782 793 A ist ein Lager mit einem Stützring bekannt, der eine oder mehrere in Umfangsrichtung beabstandete Bohrungen aufweist, die jeweils eine hydrostatische Stützeinheit für das Lager aufnehmen. Jede Stützeinheit hat ein schalenförmiges Element, dessen offene Seite einer Hauptfläche eines Lagerrings zugewandt ist. Die der Hauptfläche abgewandte geschlossene Seite des schalenförmigen Elements steht über eine kugelzonenförmige Kontaktfläche im Passeingriff mit einem darunter angeordneten Stützelement der Stützeinheit. Das schalenförmige Element und das Stützelement sind über eine Gewindeverbindung miteinander verbunden, die einen zentralen Ölkanal aufweist. Eine leichte Vorspannung zwischen beiden Elementen wird durch einen dazwischenliegenden elastisch nachgiebigen Ring vermittelt.

CH 606 793 A5 beschreibt hydrostatisch zentrierende Stützkolben zur Lagerung des Laufrades einer Rohrturbine oder Rohrpumpe. Bei langsamen radialen Bewegungen der rotierenden Einheit folgt die Stützvorrichtung diesen Bewegungen ohne Änderungen der Stützkraft, wogegen bei plötzlichen Bewegungen der rotierenden Einheit die stützende Vorrichtung der rotierenden Einheit nicht folgt, sondern unter Vergrößerung der Stützkraft die rotierende Einheit in der jeweiligen Lage festhält.

Eine solche Lagerung ist ferner zum Beispiel aus der Druckschrift DE 2039720 B2 bekannt. Es handelt sich hier einen Schlitten, der gegenüber einem Maschinengestell verschiebbar gelagert ist, wobei zwischen dem Schlitten und dem Maschinengestell Lagerkörper angeordnet sind, die über die Zuführung einer Flüssigkeit einen gleitenden Kontakt zum Maschinengestell herstellen. In einem Teil der Ausführungsformen werden dabei die Lagerkörper zusätzlich von einem Stempel auf die Gleitfläche gedrückt. Der Stempel steht dabei mit dem Lagerkörper in mechanischem Kontakt und weist eine konvexe Seite auf, mit der er auf dem Lagerkörper eine Abrollbewegung ausführen kann, über die sich Verkippungen des Schlittens gegenüber dem Maschinengestell kompensieren lassen. Der Nachteil einer solchen Ausführung besteht darin, dass zum einen an der Kontaktstelle beim Abrollen Reibung entsteht und zum anderen die Flüssigkeitsführung an dieser Stelle mit einem Dichtungselement abgedichtet werden muss. Beides führt zu Verschleißerscheinungen und macht ein regelmäßiges Auswechseln des Dichtungsrings erforderlich.

Ein Gleitlager, mit dem sich beispielsweise Arbeitsspindeln einer Werkzeugmaschine lagern lassen, wird in der Druckschrift US 3 407 012 A vorgeschlagen. Dabei werden zwischen dem Gehäuse und einer Lagerschale und zwischen der Lagerschale und dem zu lagernden Körper mehrere Druckflüssigkeitspolster aufrecht erhalten, die über Leitungen so miteinander verbunden sind, dass bei einer Schrägstellung des zu lagernden Körpers die über die Leitungen vermittelten Druckunterschiede zwischen den Flüssigkeitspolstern zu einer elastischen Verformung der Lagerschale führen und so ein mechanischer Kontakt zwischen den Bauteilen verhindert wird. In diesem Sinne wird über den Druckausgleich zwischen den Polstern ein Mechanismus zur Selbstkorrektur der Lagerung realisiert, für den allerdings zusätzlich das genannte Leitungssystem notwendig ist.

Eine hybride Lagerform mit hydrostatisch gestützten Gleitflächen ist zum Beispiel aus der Druckschrift US 3 708 215 A bekannt. Hier werden die Kräfte zwischen den Lagerringen über ein Wälzlager übertragen, wobei unter bestimmten Betriebsbedingungen die Kraftübertragung durch ein zusätzliches Gleitlager unterstützt wird. Das Gleitlager besteht aus einem ringförmigen Stempel, der gegen den äußeren Lagerring gepresst wird. In einigen Ausführungsformen besteht der ringförmige Stempel aus zwei Teilen, die über eine Flüssigkeitsschicht aneinander koppeln so dass durch relative Verschiebungen der beiden Teile gewisse Fehlstellungen der Lagerringe ausgeglichen werden können. Da die beiden ringförmigen Teile des Stempels jedoch nur als Ganzes gegeneinander verschiebbar sind, sind die Möglichkeiten für einen solchen Ausgleich beschränkt.

Aus DE 32 21 277 A1 ist ein Radiallager oder Axial-Drucklager bekannt, das wenigstens einen Stützschuh umfasst, der um ein Stützbauteil verschwenkbar ist, welches seinerseits in einen Zylinder unter der Wirkung eines ersten einstellbaren Drucks eines ersten Fluids beweglich ist, um den Stützschuh bezüglich des genannten beweglichen Organs zu positionieren. Ein zweites Fluid wird bei einem einstellbaren Druck zwischen Stützschuh und beweglichem Organ eingeführt und bildet eine Schicht zwischen dem Stützschuh und dem beweglichen Organ zur Erzeugung einer tragenden hydrostatischen und/oder hydrodynamischen Kraft des Stützschuhs.

EP 0 023 657 A1 beschreibt ein hydrodynamisches Lager, das eine Einrichtung zur Erzeugung eines hydrostatischen Druckes im Lagerspalt als Anfahrhilfe enthält. Die Lagerfläche des Lagerschuhs bildet die Oberseite eines Oberteiles, die mit dessen Unterseite durch eine Verbindungsbohrung verbunden ist und in einer Druckentlastungskammer mündet zur Druckentlastung der mechanischen Abstützung des Oberteiles auf dem Unterteil. Damit auch trotz des Vorhandenseins der Verbindungsbohrung und der Druckentlastungskammer der gewünschte hydrodynamische Druck im Lagerspalt aufgebaut werden kann, ist es wichtig, dass die Druckentlastungskammer nach außen hin vollkommen dicht ist.

Aus WO 2004/038096 A1 ist eine Durchbiegungseinstellwalze für eine Papiermaschine mit einer hydraulischen Lageranordnung zwischen Träger und Walzenmantel bekannt, deren einzelne axial nebeneinander angeordnete hydrostatische Lagerungen jeweils ein radial bewegbares Kraftelement mit einem Außenlagertaschenelement umfassen, das jeweils auf einer sphärischen Innenlagerfläche hydrostatisch gelagert ist.

US 6 337 484 B1 und US 2008/0013060 A1 beschreiben Geräte zur Lagerung und Positionierung von Wafern in einem photolithographischen Prozess wie sie beispielsweise bei der Herstellung von integrierten Schaltkreisen, Halbleiterbauteilen oder Flüssigkristall-Displays zur Anwendung kommen. Der Wafer wird auf einem Tisch positioniert, der durch aerostatische Lager gelagert ist.

### Offenbarung der Erfindung

Es ist die Aufgabe der vorliegenden Erfindung, die Kraftübertragung zwischen den beiden Lagerringen unter allen Betriebsbedingungen, insbesondere unter Schiefstellungen und radialen Verformungen und Bewegungen der Ringe verschleißfrei und ohne Berührung der Kontaktpartner sicherzustellen. Um eine möglichst hohe Sicherheit gegen Unwägbarkeiten zu erhalten, sowie eine hohe Verfügbarkeit und Langlebigkeit der Lösung zu erreichen, sollen weiterhin mögliche Verschleißelemente ohne Lagertausch möglichst einfach im Rahmen einer Lagerinspektion austauschbar sein.

Gelöst wird diese Aufgabe durch eine mit einem ersten Lagerring und einem drehbar gegenüber dem ersten Lagerring gelagerten zweiten Lagerring, wobei an dem ersten Lagerring eine Mehrzahl von hydrostatisch abgestützten Gleitlagersegmenten angeordnet ist, wobei jedes Gleitlagersegment mit einer am zweiten Lagerring angeordneten ersten Gleitfläche zusammenwirkt, wobei jedes Gleitlagersegment ein erstes Teilelement und ein zweites Teilelement aufweist, wobei das erste Teilelement derart in einer Aufnahmetasche des ersten Lagerrings aufgenommen ist, dass zwischen dem ersten Lagerring und dem ersten Teilelement ein erster Druckraum gebildet ist, wobei das erste Teilelement und das zweite Teilelement derart ausgebildet sind, dass zwischen dem ersten Teilelement und dem zweiten Teilelement ein zweiter Druckraum gebildet ist, wobei das zweite Teilelement und der zweite Lagerring so ausgebildet sind, dass zwischen dem zweiten Teilelement und dem zweiten Lagerring ein dritter Druckraum gebildet ist, wobei eine erste Oberfläche des ersten Teilelements mit einer zweiten Oberfläche des zweiten Teilelements zusammenwirkt, wobei die erste Oberfläche konvex oder konkav gekrümmt ist und die zweite Oberfläche komplementär zur ersten Oberfläche geformt ist.

Erfindungsgemäß sind an dem ersten Lagerring mehrere hydrostatisch abgestützte erste Gleitlagersegmente angeordnet, die in einer Umfangsrichtung des ersten Lagerrings voneinander beabstandet sind und mit einer an dem zweiten Lagerring angeordneten ersten Gleitfläche zusammenwirken. Durch die mehreren, entlang der Umfangsrichtung voneinander beabstandet angeordneten Gleitlagersegmente kann sich der die Lagerringe trennende Schmiermittelspalt an den Gleitlagersegmenten individuell einstellen. Es ist daher möglich, einer durch eine unsymmetrische Belastung entstehende, unterschiedliche Breite des Schmierspalts in Umfangsrichtung entgegenzuwirken, so dass ein über die Umfangsrichtung möglichst gleichmäßiger Schmiermittelspalt mit reduziertem Schmiermitteldurchsatz erhalten wird. Bevorzugt sind sämtliche Gleitlagersegmente identisch ausgebildet. Alternativ können die ersten Gleitlagersegmente unterschiedlich ausgebildet sein. Beispielsweise können die ersten Gleitlagersegmente unterschiedliche Querschnitte aufweisen und/oder unterschiedlich große, gegenüber der Gleitfläche wirksame Oberflächen.

Die erfindungsgemäße zweiteilige Ausführung des Gleitlagersegments erlaubt gegenüber einteiligen Bauformen einen erweiterten Bewegungsspielraum um betriebsbedingte Schiefstellungen und Verformungen auszugleichen. Ein einteiliger Stempel zwischen den Lagerringen kann prinzipiell zwei Ausgleichsbewegungen ausführen. Er wird zum einen durch die Druckbeaufschlagung gegen den rotierenden Lagerring gepresst und folgt daher den relativen Verschiebungen der Lagerringe und schafft auf diese Weise einen Ausgleich, wenn zum Beispiel im Falle eines Radiallagers die beiden Lagerringe belastungsbedingt eine Lage mit relativer Exzentrizität einnehmen. Zum anderen kann er sich bis zu einem gewissen Grad durch Verkippen an Schiefstellungen der Lagerringe anpassen. Da der Stempel dabei als Ganzes bewegt wird, ist nicht in allen Fällen gewährleistet, dass die Spaltweiten zwischen Stempel und Lagerring an allen Stellen gleichermaßen gering bleiben. Eine Verringerung des Abstandes zwischen Stempel und Lagerring an einer Stelle wird also in der Regel mit einer Vergrößerung des Abstandes an einer anderen Stelle verbunden sein. Dadurch, dass bei dem erfindungsgemäßen zweiteiligen Stempel die beiden Teilelemente ebenfalls gegeneinander bewegbar sind, gewinnt das Gleitlagersegment zusätzliche Freiheitsgrade, durch die eine bessere Anpassung an die jeweilige Stellung und Verformung der Lagerringe möglich ist.

Das erfindungsgemäße Gleitlagersegment weist dazu zwischen den beiden Teilelementen einen hydrostatisch gestützten Zwischenraum auf, so dass sich zusammen mit den beiden Zwischenräumen zwischen dem Gleitlagersegment und den Lagerringen eine Anordnung mit insgesamt drei Zwischenräumen ergibt, die den oben genannten Druckräumen entsprechen. Zunächst ist das erste Teilelement so in eine Aufnahmetasche des ersten Lagerrings aufgenommen, dass eine Druckbeaufschlagung der Aufnahmetasche das erste Teilelement in Richtung des drehbaren Lagerrings drückt, wobei die Innenfläche der Aufnahmetasche durch den Druck vollständig vom ersten Teilelement getrennt wird. Zwischen der Oberfläche des ersten Teilelements und des zweiten Teilelements befindet sich ein weiterer Zwischenraum, der bevorzugterweise unter Druck eine vollständige Trennung der beiden, den Zwischenraum begrenzenden Oberflächen bewirkt. Schließlich befindet sich zwischen dem zweiten Teilelement und dem zweiten Lagerring ein weiterer Zwischenraum, der unter Druck ein kontaktfreies Gleiten zwischen zweitem Teilelement und Lagerring möglich macht. Auf diese Weise können, vermittelt durch das erste und zweite Teilelement, zwischen dem ersten und zweiten Lagerring Kräfte übertragen werden, ohne dass die einzelnen Teile dazu in mechanischem Kontakt stehen. Stattdessen werden die Kräfte in den Druckräumen auf rein hydrostatische Weise über die entsprechenden Druckpolster übertragen, wodurch vorteilhafterweise jede mechanische Reibung vermieden wird.

Im Falle eines Radiallagers weist das zweite Teilelement erfindungsgemäß bevorzugt an der Oberseite eine gekrümmte Oberfläche auf, die eine Schmiegung an die, ebenfalls gekrümmte erste Gleitfläche des zweiten Lagerrings ermöglicht. Handelt es sich andererseits um ein Axiallager, kann die Oberseite des zweiten Teilelements erfindungsgemäß bevorzugt flach ausgebildet sein und mit einer entsprechenden flachen Gleitfläche des zweiten Lagerrings zusammenwirken.

Bei allen drei Druckräumen müssen aus den oben genannten Gründen zu große Abstände zwischen den den Druckraum begrenzenden Elementen vermieden werden. Die technische Herausforderung besteht daher darin, die Form der Teilelemente so zu gestalten, dass einerseits die Beweglichkeit der Teilelemente zueinander eine möglichst flexible Anpassung an eine Änderung der Form und relativen Lage der Lagerringe erlaubt und andererseits die drei Druckräume gleichmäßig klein gehalten werden, ohne dass es zu einem mechanischen Kontakt zwischen den verschiedenen Teilen kommt. Im Folgenden werden daher verschiedene vorteilhafte Ausgestaltungen beschrieben, die das erfindungsgemäße Konzept auf eine Art und Weise umsetzen, die diesen Anforderungen in vorteilhafter Weise Genüge leistet.

Gemäß einer bevorzugten Ausgestaltung der Erfindung wird der zweite Druckraum zwischen den beiden Teilelementen des Gleitlagersegments durch zwei gewölbte, komplementäre Oberflächen des ersten und zweiten Teilelements begrenzt. Eines der beiden Teilelemente ist dabei so geformt, dass die, dem anderen Teilelement zugewandte Oberfläche eine konkave Schale bildet, während sich die gegenüberliegende Oberfläche des anderen Teilelements der konkaven Oberfläche konvex entgegenwölbt. Dadurch wird das Teilelement mit der konvexen Oberfläche in vorteilhafter Weise vom Teilelement mit konkaver Oberfläche aufgenommen ohne die erfindungsgemäß vorgesehene Beweglichkeit gegenüber dem aufnehmenden Partner zu verlieren. Erfindungsgemäß bevorzugt weisen die beiden Oberflächen dabei eine konstante Krümmung auf, haben also die Form von Kugelhauben. Vorzugsweise sollten die beiden Krümmungsradien ähnlich, beziehungsweise im Wesentlichen gleich sein, um eine große Schmiegung zwischen den beiden gekrümmten Flächen zu erreichen. Durch die komplementären Formen der beiden Oberflächen entstehen unter Druckbeaufschlagung und Belastung Kräfte, die eine bestimmte relative Lage der beiden Teilelemente erzwingen können. Grundsätzlich wird durch das Zusammenwirken der konkaven und konvexen Oberfläche eine Kopplung der verschiedenen Kräfte bewirkt, die zwischen den beiden Flächen übertragen werden. Wird zum Beispiel die konvexe Oberfläche durch eine äußere Belastung senkrecht in die Schalenform der konkaven Oberfläche gepresst, entstehen senkrecht zur Normalkraft wirkende Kräfte, die eine Zentrierung der beiden Oberflächen zueinander bewirken und sie mittig zueinander positionieren. Diese zentrierend wirkenden Kräfte sind bei kleineren Krümmungsradien größer und fallen bei größeren Krümmungsradien geringer aus.

Gemäß einer bevorzugten Ausgestaltung der Erfindung ist die erste Oberfläche kugelförmig konkav geformt und die zweite Oberfläche kugelförmig konvex geformt. Dadurch kann das zweite Teilelement vorteilhafterweise robuster ausgeführt werden, höhere Biegemomente aufnehmen und aufgrund des größeren Volumens zusätzliche Elemente aufnehmen. Vorzugsweise haben die beiden Oberflächen dabei die Form von Kugelhauben.

Gemäß einer alternativ bevorzugten Ausgestaltung ist die erste Oberfläche kugelförmig konvex geformt und die zweite Oberfläche kugelförmig konkav geformt. Dadurch lässt sich das zweite Teilelement vorteilhafterweise schmaler ausführen, was im Montagefall die Austauschbarkeit erleichtert. Des Weiteren besitzt das erste Teilelement auf diese Weise ein größeres Volumen und kann dadurch wiederum zusätzliche Elemente aufnehmen. Auch in dieser Ausführungsform haben die beiden Oberflächen vorzugsweise die Form von Kugelhauben.

Gemäß einer bevorzugten Ausgestaltung der Erfindung wirkt die erste Oberfläche derart mit der zweiten Oberfläche zusammen, dass das zweite Teilelement drehbar gegenüber dem ersten Teilelement gelagert ist. Zur räumlichen Beschreibung der Drehachsen sei als Bezugsachse die Verbindungslinie zwischen dem ersten und dem zweiten Teilelement gewählt. Diese Verbindungslinie fällt in Abwesenheit von Fehlstellungen und Verformungen im Wesentlichen mit der Richtung zusammen, in der das Gleitlagersegment gegen den zweiten Lagerring gepresst wird. Gleichzeitig stellt sie die Hauptübertragungsrichtung dar, in der Kräfte zwischen den beiden Teilelementen vermittelt werden. Das zweite Teilelement ist nun so gelagert, dass es sich zum einen um diese Bezugsachse drehen kann und zum anderen gegenüber dieser Bezugsachse eine geneigte Stellung einnehmen kann, das heißt in zwei weitere unabhängige Richtungen drehbar ist. Die beiden letzteren Drehrichtungen erschließen einen zusätzlichen Bewegungsspielraum, über den sich das zweite Teilelement durch entsprechende Neigungen flexibel an mögliche Fehlstellungen der Lagerringe anpassen kann. Erfindungsgemäß bevorzugt wird dies durch entsprechend gestaltete Oberflächen zwischen den Teilelementen erreicht. So können zum Beispiel die weiter oben beschriebenen konvexen und konkaven Oberflächen, die zusammen den zweiten Druckraum zwischen den beiden Teilelementen begrenzen, so geformt sein, dass sie unter einer Druckbeaufschlagung eine Gleitbewegung gegeneinander ausführen können. Das zweite Teilelement wirkt mit dem zweiten Lagerring ebenfalls über hydrostatische Gleitflächen zusammen, so dass das zweite Teilelement zwischen dem ersten Teilelement und dem zweiten Lagerring drehbar gelagert ist. Durch die drehbare Anordnung des zweiten Teilelements wird eine Trennung der folgenden beiden Bewegungs- und Ausgleichsmöglichkeiten bewirkt: Bei einer Abstandsänderung der beiden Lagerringe, zum Beispiel aufgrund einer exzentrischen Lage beider Ringe, ist das erfindungsgemäße Gleitlagersegment fähig, die Abstandsänderung dadurch auszugleichen, dass das erste Teilelement ein Stück weit aus seiner Aufnahmetasche herausgeschoben wird und sich somit in Richtung der Bezugsachse auf den geänderten Abstand einstellt. Die drehbare Lagerung des zweiten Teilelements dient dagegen dazu, möglichen Schiefstellungen der Lagerringe auf eine Weise zu begegnen, in der der hydrostatisch gestützte Zwischenraum zwischen zweitem Teilelement und zweitem Lagerring möglichst gleichmäßig klein gehalten wird und eine gute Kraftübertragung zwischen dem zweiten Teilelement und dem zweiten Lagerring gewährleistet ist. Diese Übertragung findet statt, wenn das zweite Teilelement an den zweiten Lagerring gedrückt wird und dadurch eine Kraft auf ihn überträgt. Um die, bei dieser Ausgestaltung erzielte Trennung zwischen der Funktion des ersten- und zweiten Teilelements zu erreichen und dabei zu gewährleisten, dass sämtliche Zwischenräume in allen Betriebsbedingungen hinreichend kleine Spaltweiten aufweisen, ist es vorteilhaft, die Flächen zwischen ersten und zweitem Teilelement sowie zwischen zweitem Teilelement und dem zweiten Lagerring mit einer großen Schmiegung herzustellen. Optimalerweise sollte die Schmiegung 100%, mindestens aber 50% betragen.

Gemäß einer bevorzugten Ausgestaltung der Erfindung ist der zweite Druckraum so ausgebildet, dass bei einer Druckbeaufschlagung des zweiten Druckraums hydrostatische Kräfte auf die erste Oberfläche und die zweite Oberfläche wirken, die eine vollständige Trennung der ersten Oberfläche und der zweiten Oberfläche bewirken. Insofern kann ein mechanischer Kontakt zwischen der ersten Oberfläche und der zweiten Oberfläche vollständig aufgehoben werden. Das hydrostatische Medium, das bei der Druckbeaufschlagung den zweiten Druckraum ausfüllt, kann an allen Punkten der, den zweiten Druckraum begrenzenden ersten und zweiten Oberfläche eine Kraft in Normalrichtung der jeweiligen Oberfläche bewirken. Diese Einzelkräfte können sich derart zu einer ersten Gesamtkraft auf die erste Oberfläche und einer zweiten Gesamtkraft auf die zweite Oberfläche summieren, dass die erste und zweite Gesamtkraft entgegengesetzt gerichtet sind und jeweils vom zweiten Druckraum weg zeigen. Auf diese Weise können die beiden Oberflächen auseinander gedrückt und der Festkörperkontakt zwischen den beiden Teilelementen aufgehoben werden. Dadurch ist es vorteilhafterweise möglich, dass unter Last die Kraft zwischen den beiden Teilelementen des Gleitlagersegments übertragen wird, ohne dass dafür ein mechanischer Kontakt zwischen den beiden Teilelementen notwendig ist. Die Kraft wird dabei über das hydrostatische Medium zwischen den Teilelementen vermittelt, so dass insbesondere jegliche mechanische Reibung zwischen der ersten und zweiten Oberfläche vermieden wird.

Erfindungsgemäß weist der erste Druckraum eine erste hydrostatisch wirksame Projektionsfläche, der zweite Druckraum eine zweite hydrostatisch wirksame Projektionsfläche und der dritte Druckraum eine dritte hydrostatisch wirksame Projektionsfläche auf, wobei die dritte Projektionsfläche größer oder gleich der zweiten Projektionsfläche ist und die zweite Projektionsfläche größer oder gleich der ersten Projektionsfläche ist. Diese geometrische Gestaltung der drei Druckräume wirkt sich in folgender Weise auf die in den jeweiligen Druckräumen gebildeten hydrostatischen Kräfte aus: Liegt beispielsweise die erste Oberfläche des zweiten Druckraums vollständig an der zweiten Oberfläche des zweiten Druckraums an, d.h. besteht zwischen den beiden Teilelementen ein vollständig geschlossener Kontakt, ohne dass das Druckmedium durch einen Spalt nach außen treten kann, so ist die Kraft, mit der das Druckmedium das zweite Teilelement vom ersten Teilelement weg und in Richtung des zweiten Lagerrings drückt, im Wesentlichen bestimmt durch die zweite hydrostatisch wirksame Projektionsfläche in Richtung auf den zweiten Lagerring zu. Sofern keine Fehlstellungen oder Verformungen bestehen, entspricht diese Richtung der oben eingeführten Hauptübertragungsrichtung. Für die Kraftwirkung, die das hydrostatische Medium auf einen Punkt der Innenfläche des Druckraums in Richtung der Hauptübertragungsrichtung ausübt, ist ausschließlich der Flächenanteil maßgeblich, der senkrecht zur Hauptübertragungsrichtung steht. Parallele Flächenanteile führen dagegen lediglich zu einer zusätzlichen Kraftkomponente senkrecht zur Hauptübertragungsrichtung. Die Kraftwirkung in Richtung der Hauptübertragungsrichtung ist daher proportional zur der entsprechenden orthogonalen Projektionsfläche. Herrscht nun in allen drei Druckräumen ein vollständig geschlossener Kontakt, ist der damit einhergehende hydrostatische Druck in allen drei Räumen gleich und die hydrostatischen Kräfte sind durch die Flächen der drei Projektionen bestimmt. Bilden die dritte Projektionsfläche, die zweite Projektionsfläche und erste Projektionsfläche eine abnehmende Abfolge, so ist die hydrostatische Kraft im dritten Druckraum größer als die im zweiten Druckraum und diese wiederum größer als die im ersten Druckraum. Unter Belastung ergibt sich so im dritten Druckraum die stärkste Tendenz einen Spalt zwischen zweitem Teilelement und zweitem Lagerring zu öffnen und die Tendenz im zweiten Druckraum ist stärker als im ersten Druckraum.

Erfindungsgemäß sind der erste Druckraum und der zweite Druckraum über einen durch das erste Teilelement verlaufenden Kanal verbunden und der zweite Druckraum und der dritte Druckraum sind über einen durch das zweite Teilelement verlaufenden Kanal verbunden. Wird der erste Druckraum in der Aufnahmetasche des ersten Lagerrings über eine Schmierstoffversorgung mit Druck beaufschlagt, füllen sich über die beiden Kanäle sowohl der zweite, als auch der dritte Druckraum ebenfalls mit Schmierstoff. Dadurch werden vorteilhafterweise alle drei Druckräume gleichermaßen mit Schmierstoff versorgt.

Gemäß der Erfindung weisen der durch das zweite Teilelement verlaufenden Kanal und/oder der durch das erste Teilelement verlaufende Kanal jeweils mindestens ein Drosselelement auf. Die Verteilung des Schmierstoffs auf die drei Druckräume ist zum einen durch die Form und Größe der zugehörigen Spalte bestimmt, durch die der Schmierstoff nach außen tritt und zum anderen durch den Strömungswiderstand der Kanäle, die die Druckräume mit Schmierstoff versorgen. Über die in die Kanäle zusätzlich eingebrachten Drosselelemente kann vorteilhafterweise die Verteilung des Schmierstoffs zusätzlich beeinflusst werden und so eine optimale Verteilung über die drei Druckräume erreicht werden. Optional kann der Schmierstoff über zusätzliche Kanäle mit Drosselelementen in den Zwischenraum zwischen den beiden Lagerringen entlassen werden, so dass auf diese Weise eine zusätzliche Einstellmöglichkeit für die Schmiermittelverteilung entsteht.

Gemäß der Erfindung wird die Drosselung durch eine integrierte Ölleitungsführung in den Teilelementen realisiert, die beispielsweise durch 3D-Druck hergestellt werden kann. Dabei ist die Leitung in der Form einer Spirale in den tragenden Querschnitt (zum Beispiel ein Zylinder mit Einschraubgewinde) eingearbeitet. Die Drossellänge kann dabei durch Festlegung der Steigung der Spirale im Kanal festgelegt werden. Dies ermöglicht größere Leitungslängen und eine größere Drosselwirkung als eine zentrale, gerade Bohrung. Hierdurch wird es vorteilhafterweise möglich, den Leitungsquerschnitt ausreichend groß zu gestalten (vorzugsweise 1 mm) und dennoch eine ausreichende Drosselwirkung zu erzielen. Gemäß einer bevorzugten Ausgestaltung sind die Drosseln als Einschraubdrosseln ausgeführt. Dadurch kann die Fertigung der Drosseln vorteilhafterweise separat erfolgen. Darüber hinaus wird ein Austausch der Drosseln im Montagefall erleichtert. Die Notwendigkeit für derartige Drosselelemente, die dem Ölfluss einen Widerstand entgegensetzen, ergibt sich bei einer begrenzten Menge an zugeführtem Hochdrucköl, das auf die verschiedenen Druckräume verteilt werden muss. Steht dagegen eine ausreichend große Menge an Hochdrucköl zur Verfügung oder sind die Widerstände der Ölleitungen selbst bereits ausreichend, um für eine gleichmäßige Verteilung zu sorgen, kann gegebenenfalls auf zusätzliche Widerstandselemente verzichtet werden. Die Fertigung der Drosseln ist insoweit aufwendig und schwierig, da die Querschnitte der ölführenden Kanäle möglichst geringe Durchmesser und lange Leitungslängen besitzen sollen, um eine ausreichend große Drosselwirkung zu haben. Der Durchmesser der Drosselbohrung wird hierbei bevorzugt zwischen 0.3 und 2 mm, besonders bevorzugt mit 1 mm ausgeführt, um ein mögliches Verschließen der Leitung durch Schmutz zu verhindern und dennoch eine ausreichende Drosselwirkung zu erreichen. Alle anderen Kanäle werden vorzugsweise mit mindestens 2 mm Kanaldurchmesser ausgeführt, um ein Verschließen der Kanäle sicher auszuschließen und die Bohrungen mit akzeptablem Aufwand zu fertigen.

Gemäß einer bevorzugten Ausgestaltung der Erfindung weist das zweite Teilelement eine mit der ersten Gleitfläche zusammenwirkende zweite Gleitfläche auf, wobei die zweite Gleitfläche mindestens zwei hydrostatische Taschen aufweist, die jeweils über einen, durch das zweite Teilelement verlaufenden Kanal mit dem zweiten Druckraum verbunden sind. Die Taschen werden dadurch jeweils separat mit Schmierstoff versorgt. Entsteht durch eine Fehlstellung ein großer Spalt zwischen der ersten und zweiten Gleitfläche, fällt der Druck durch das entweichende Schmiermittel stark ab und es entsteht eine ungleichmäßige Druckverteilung über die Flächen. Durch die hydrostatischen Taschen wird erreicht, dass der Schmierfilm bei einer solchen Leckage nicht zusammenbricht. Stattdessen ergibt sich in der durch den Spalt betroffenen Tasche eine Druckverminderung, so dass sich dieser Teil der Fläche stärker an die gegenüber liegende Fläche annähert, wodurch die Spaltweite wieder verringert wird.

Weitere Möglichkeiten, die hydrostatische Kopplung zwischen den verschiedenen Elementen zu beeinflussen, bestehen in einer entsprechenden Gestaltung beteiligten Oberflächen. Gemäß einer bevorzugten Ausgestaltung der Erfindung weist die erste Oberfläche und/oder die zweite Oberfläche Führungsrillen für ein hydrostatisches Medium auf. Über die Führungsrillen lässt sich die Schmierstoffverteilung im zweiten Druckraum vorteilhafterweise zusätzlich beeinflussen.

Gemäß einer konstruktiven Ausgestaltung verlaufen die Führungsrillen spiralförmig oder ringförmig oder sternförmig.

Gemäß einer bevorzugten Ausgestaltung der Erfindung weist die erste Oberfläche und/oder die zweite Oberfläche mindestens zwei hydrostatische Taschen auf. Diese hydrostatischen Taschen stabilisieren, in ähnlicher Weise wie die oben beschriebenen hydrostatischen Taschen des zweiten Teilelements, die Druckverteilung im zweiten Druckraum, wenn durch eine Fehlstellung übermäßig viel Schmierstoff aus dem zweiten Druckraum austritt. Gemäß einer weiteren bevorzugten Ausgestaltung weist die der Aufnahmetasche zugewandte Fläche des ersten Teilelements ebenfalls zwei, besonders bevorzugt vier oder mehr Taschen auf.

Gemäß einer bevorzugten Ausgestaltung der Erfindung weist das erste Teilelement und/oder das zweite Teilelement eine Verdrehsicherung auf, die in einer fest mit dem ersten Lagerring verbundenen Nut geführt ist. Falls die Form der Oberflächen zwischen erstem und zweitem Teilelement eine Verdrehung des zweiten Teilelements um die Bezugsrichtung nicht verhindert, lässt sich auf diese Weise vorteilhafterweise eine solche Verdrehung vermeiden.

Gemäß einer bevorzugten Ausgestaltung der Erfindung ist zwischen der Aufnahmetasche des ersten Lagerrings und dem ersten Teilelement mindestens ein, vorzugsweise zwei Dichtungselemente angeordnet. Dadurch wird vorteilhafterweise ein Entweichen des Schmiermittels verhindert und ein damit verbundener Druckabfall vermieden. Zusätzlich wird durch die Kolbenringe die Führung des ersten Teilelements sichergestellt. Die Kolbenringe sind Standardkomponenten, die z.B. zur Abdichtung von Hydraulikzylindern eingesetzt werden. Die Anforderungen an die Dichtungsringe sind gute Dichtigkeit, geringe Verschließneigung und Reibung bei kleinen Bewegungen und niedrigen Relativgeschwindigkeiten. Das erste Teilelement ist vorzugsweise gehärtet, um den Verschleiß zu minimieren. Alternativ kann das erste Teilelement auch zylindrisch ausgeführt werden und mit einer geringen Passungstoleranz in einer Buchse geführt werden.

Die beschriebenen Ausführungsformen des erfindungsgemäßen Gleitlagersegments lassen sich auch in einem hybriden Lager einsetzen, bei dem die Kraftübertragung zwischen den Lagerringen teilweise durch das Gleitlager und teilweise durch Wälzkörper geleistet wird. Gemäß einer bevorzugten Ausgestaltung der Erfindung weist die Lageranordnung mindestens eine Wälzkörperreihe mit mehreren Wälzkörpern auf, die an einer ersten Laufbahn des ersten Lagerrings und an einer zweiten Laufbahn des zweiten Lagerrings abrollbar angeordnet sind. Dadurch werden die technischen Vorteile beider Lagerformen in einer einzigen Vorrichtung kombiniert.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Zeichnungen

- **Figur 1**: zeigt verschiedene Ansichten einer Lageranordnung gemäß einem ersten Ausführungsbeispiel der vorliegenden Erfindung.
- **Figur 2**: zeigt zwei Ansichten einer Lageranordnung gemäß einem zweitem Ausführungsbeispiel der vorliegenden Erfindung.
- **Figur 3**: zeigt verschiedene Ansichten einer Lageranordnung gemäß einem dritten Ausführungsbeispiel der vorliegenden Erfindung.
- **Figur 4**: zeigt eine Aufsicht und zwei Schnittdarstellungen einer Lageranordnung gemäß einem Ausführungsbeispiel der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

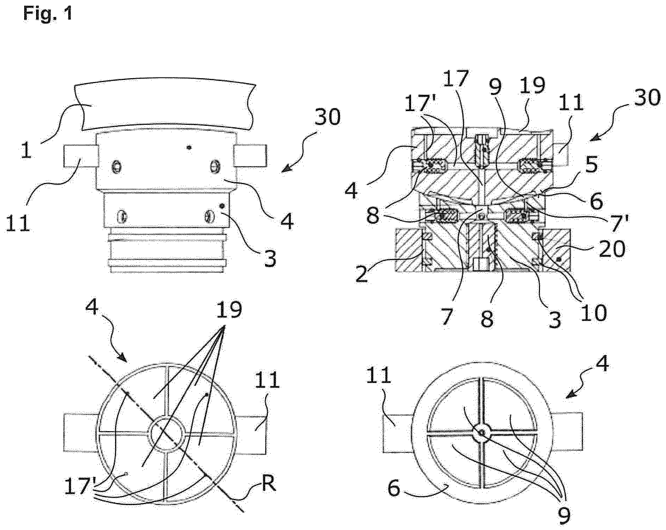

Die Lageranordnung gemäß dem ersten Ausführungsbeispiel nach **Figur 1** weist die erfindungsgemäße zweiteilige Form des Gleitlagersegments 30 auf. Wie in der Seitenansicht links oben zu sehen ist, besteht das Gleitlagersegment 30 aus einem unteren ersten Teilelement 3, auf dem das zweite Teilelement 4 hydrostatisch gestützt aufsitzt und nach oben, ebenfalls hydrostatisch gestützt an den rotierenden Lagerring 1 gepresst wird. Das untere Teilelement 3 ist dabei vertikal bewegbar und kann auf diese Weise eine Abstandsänderung zwischen dem unteren, festen Lagerring 20 und dem oberen, rotierenden Ring 1 ausgleichen. Im Folgenden wird die Vertikale auch als Stellrichtung und das erste Teilelement 3 dementsprechend als Stellstempel 3 bezeichnet. Das zweite Teilelement 4 stellte den hydrostatischen Kontakt mit dem rotierenden Lagerring 1 her, indem die Gleitfläche an der Oberseite des zweiten Teilelements 4 an die Gleitfläche des rotierenden Lagerrings 1 gedrückt wird. Das zweite Teilelement 4 wird daher im Folgenden auch als Druckstempel 4 bezeichnet.

Die Gleitfläche des Druckstempels 4 weist eine große Schmiegung zur Gleitfläche des zweiten Lagerrings 1 auf. Dazu ist die Gleitfläche des Druckstempels 4 in Umfangrichtung gekrümmt, komplementär zur entsprechenden Krümmung der Gleitfläche des Lagerrings 1. Weist die Gleitfläche des Lagerrings 1 quer zur Umlaufrichtung ebenfalls eine Krümmung auf, kann die Gleitfläche des Druckstempels 4 entsprechend doppelt gekrümmt gestaltet werden. Weisen die Gleitflächen von Druckstempel 4 und Lagerring 1 unterschiedliche Krümmungsradien auf, erzeugt die Druckverteilung im Zwischenraum eine selbstzentrierende Wirkung der beiden Oberflächen 5, 6, die umso größer ist, je kleiner die jeweiligen Krümmungsradien ausfallen. An der Außenfläche von Stell- und Druckstempel 3, 4 sind mehrere Bohrungen zu sehen, durch die das Schmiermittel austreten kann, das im Innern der beiden Stempel 3, 4 zu den hydrostatischen Flächen geführt wird. An den Seiten des Druckstempels 4 sind bei dieser Ausführungsform zusätzliche Verdrehsicherungen 11 angebracht, die in einer (nicht dargestellten) Ausnehmung geführt sind, die fest mit dem unteren Lagerring 20 verbunden ist.

Links unten ist eine Aufsicht auf die Gleitfläche an der Oberseite des Druckstempels 4 zu sehen. Die Gleitfläche weist vier hydrostatische Taschen 19 auf, die jeweils über einen Taschenkanal 7' in dem Stellstempel 3 mit Schmiermittel versorgt werden. Verteilt sich aufgrund einer Fehlstellung der vom Schmiermittel ausgeübte Druck ungleichmäßig über die hydrostatische Kontaktfläche, ist der Druckstempel 4 durch die hydrostatischen Taschen 19 zu einer Selbstkorrektur fähig, bei der sich die Tasche 19 mit dem stärksten Druckverlust an die gegenüberliegende Gleitfläche des Lagerrings 1 annähert, wodurch sich eine Selbstzentrierung des Druckstempels 4 einstellt.

Die Darstellung rechts oben in **Figur 1** zeigt einen Schnitt des Gleitlagersegments 30 entlang der in der linken unteren Draufsicht eingezeichneten Schnittebene R. Wie in dieser Schnittdarstellung zu erkennen ist, sitzt der Stellstempel 3 in einer Aufnahmetasche 2 des unteren Lagerrings 20. Zwischen Stellstempel 3 und Aufnahmetasche 2 befindet sich ein erster Druckraum, der durch zwei Kolbenringe 10 abgedichtet ist. Das Schmiermittel wird durch eine Bohrung im ersten Lagerring 20 in den ersten Druckraum gepresst, wo es den mechanischen Kontakt zwischen Stellstempel 3 und Aufnahmetasche 2 vollständig aufhebt. Zusätzlich wird das Schmiermittel in einen Kanal 7 gepresst, der im Inneren des Stellstempels 3 zum zweiten Druckraum zwischen Stellstempel 3 und Druckstempel 4 führt. Der zweite Druckraum, der zwischen der Oberfläche 5 des Stellstempels 3 und der Oberfläche 6 des Druckstempels 4 gebildet ist, wird dadurch auch mit Druck beaufschlagt, so dass die beiden Oberflächen 5, 6 ebenfalls voneinander abheben. Die Form der beiden Oberflächen 5, 6 ist sowohl in Richtung der Horizontalen, als auch senkrecht zur Zeicheneben gekrümmt, so dass die Oberseite 5 des Stellstempels 4 die konkave Form einer Schale aufweist, in die sich die konvexe Oberfläche 6 des Druckstempels 4 einfügt. Durch den Schmiermittelfilm zwischen den beiden Oberflächen 5, 6 kann sich der Druckstempel 4 einmal prinzipiell um eine vertikale Achse drehen und zusätzlich um zwei Achsen, die beide senkrecht auf der Vertikalen stehen. Um die Drehung um die vertikale Achse zu verhindern ist seitlich am zweiten Teilelement 4 eine Verdrehsicherung 11 angebracht, die in einer (nicht dargestellten) Nut des ersten Lagerrings 20 geführt wird. Die erfindungsgemäße flexible Anpassung an Verschiebungen und Verformungen der Lagerringe 1, 20 wird also durch das Wechselspiel zwischen vertikaler Verschiebbarkeit des Stellstempels 3 und der Drehbarkeit des Druckstempels 4 ermöglicht. Die im Zwischenraum zwischen der konvexen und konkaven Fläche 5, 6 wirkenden hydrostatischen Kräfte bewirken durch die Krümmung der beiden Flächen 5, 6 darüber hinaus eine Selbstzentrierung von Stell- und Druckstempel 3, 4.

Vom zweiten Druckraum aus führt ein weiterer Kanal 17 im Inneren des Druckstempels 4 zum dritten Druckraum zwischen der Gleitfläche an der Oberseite des Druckstempels 4 und der gegenüber liegenden Gleitfläche des rotierenden Lagerrings 1. Dadurch wird auch der dritte Druckraum mit Schmiermittel versorgt und die hydrostatische Trennung der beiden Gleitflächen bewirkt. Die Oberseite des Druckstempels 4 ist ebenfalls gekrümmt und weist vier hydrostatische Taschen 19 auf, so dass sich, ähnlich wie im Zwischenraum zwischen Stell- und Druckstempel 3, 4 eine selbstzentrierende Wirkung ergibt. Jede der vier Taschen 19 wird durch einen Taschenkanal 17' mit Schmiermittel versorgt, wobei jeder der Taschenkanäle 17' vom zentralen Kanal 17 des Druckstempels 4 abzweigt. Der zentrale Kanal 17 selbst mündet ebenfalls an der Oberseite des Druckstempels 4. Zusätzlich sind der Kanal 17 und die Taschenkanäle 17' mit Drosselelementen 8 ausgestattet, über die sich die Schmierstoffverteilung zwischen den drei Druckräumen optimal gestalten lässt.

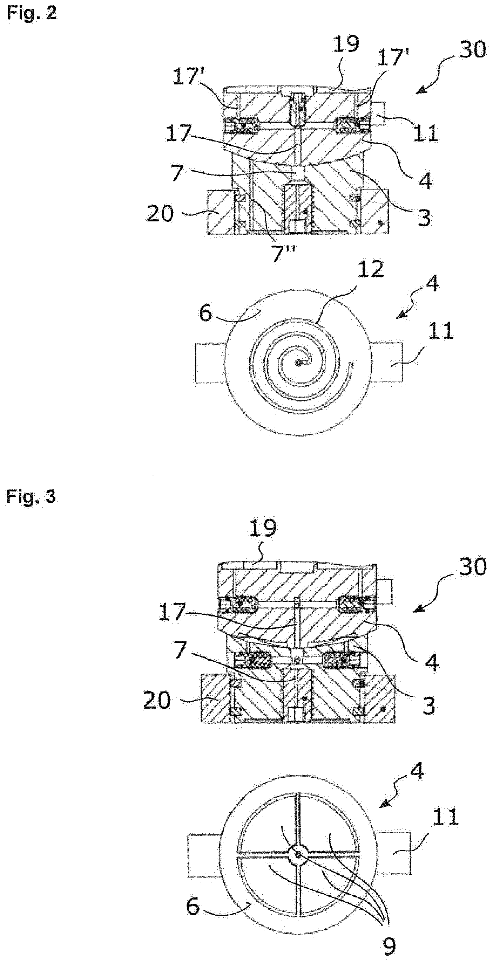

In **Figur 2** ist eine weitere Ausführungsform der Erfindung dargestellt. Die Abbildung oben zeigt einen Schnitt durch das Gleitlagersegment 30, während die untere Abbildung eine Unteransicht des zweiten Teilelements 4 des Gleitlagersegments 30 zeigt. Wie in der Unteransicht zu sehen ist, weist die zweite Oberfläche 6 eine spiralförmige Führungsrille 12 für das Schmiermittel auf. Durch die Führungsrille 12 wird das Schmiermittel gleichmäßig auf der gesamten Fläche 6 zugeführt. Wie in der oberen Schnittdarstellung gezeigt, wird die spiralförmige Führungsrille 12 durch zwei, im ersten Teilelement 3 verlaufende Kanäle 7, 7" mit Schmierstoff versorgt. Der erste Kanal 7 verläuft zentral in der Mitte des ersten Teilelements 3, während der zweite Kanal 7" radial nach außen versetzt verläuft und in das äußere Ende der spiralförmigen Führungsrille 12 mündet.

In **Figur 3** ist eine weitere Ausführungsform der Erfindung dargestellt. Im Vergleich zu Figur 1 mündet hier der zentrale Kanal 7 im Druckstempel 4 nicht direkt auf der Oberseite des Druckstempels 4 sondern verzweigt sich im Inneren in vier Taschenkanäle 17, die zu den hydrostatischen Taschen 19 an der Oberseite des Druckstempels 4 führen.

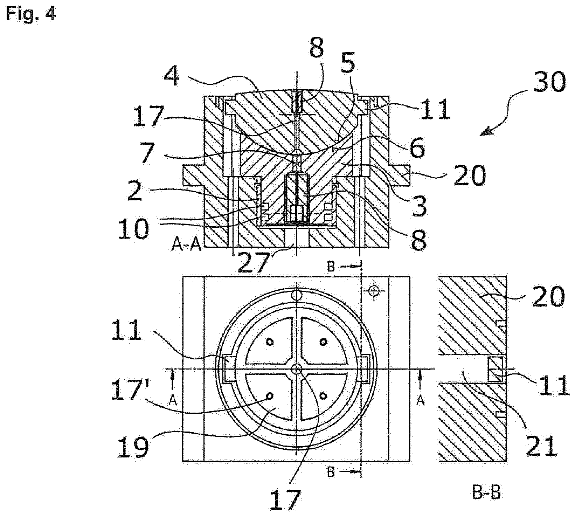

In **Figur 4** ist links unten eine Aufsicht auf ein Gleitlagersegment 30 gemäß einer Ausführungsform der Erfindung dargestellt. In der Aufsicht sind zwei Schnittlinien A-A und B-B gekennzeichnet und die zugehörigen Schnittdarstellungen sind oberhalb (A-A) und rechts (B-B) neben der Aufsicht abgebildet. Wie in der Aufsicht zu erkennen ist, weist das zweite Teilelement 4 des Gleitlagersegments 30 an der, dem bewegten Lagerring 1 zugewandten Oberseite vier hydrostatische Taschen 19 auf, die über Taschenkanäle 17' mit Schmierstoff versorgt werden, die im Innern des zweiten Teilelements 4 verlaufen (in der Schnittdarstellung nicht sichtbar). Ferner mündet der zentrale Kanal 17 des zweiten Teilelements 4 an der Oberseite des zweiten Teilelements 4. Wie im Schnitt A-A zu sehen ist, ist das Gleitlagersegment 30 von einer, fest mit dem ersten Lagerring 20 verbundenen Führung eingefasst, die im unteren Teil die Aufnahmetasche 2 für das erste Teilelement 3 bildet und im oberen Teil eine Nut 21 zur Führung der Verdrehsicherung 11 aufweist. Die Verdrehsicherung 11 ist in Form eines Führungsstifts ausgebildet und liegt in der Nut 21, so dass eine Verdrehung des zweiten Teilelements 4 verhindert wird. In der Aufnahmetasche 2 wird an der Unterseite des ersten Teilelements 3 der erste Druckraum gebildet, der durch einen Kanal 27 in dem ersten Lagerring 20 mit einem Schmiermittel versorgt wird und durch zwei Dichtungsringe 10 gegen ein Austreten des Schmiermittels abgedichtet ist. Der erste Druckraum ist über einen, im Innern des ersten Teilelements 3 verlaufenden Kanal 7 mit dem zweiten Druckraum zwischen erstem und zweitem Teilelement 3, 4 verbunden. Dieser Kanal 7 weist ein Drosselelement 8 auf, über das sich die Verteilung des Schmiermittels zwischen erstem und zweitem Druckraum beeinflussen lässt. Der zweite Druckraum wird zwischen dem ersten und zweiten Teilelement 3, 4 gebildet, wo die konkav gewölbte Oberseite 5 des ersten Teilelements 3 die entsprechend konvex gewölbte Unterseite 6 des zweiten Teilelements 4 aufnimmt. Der zweite Druckraum ist wiederum durch einen, im Innern des zweiten Teilelements 4 verlaufenden Kanal 17 mit dem dritten Druckraum verbunden, der zwischen der Oberseite des zweiten Teilelements 4 und der (nicht dargestellten) Gleitfläche des zweiten Lagerrings 1 gebildet wird. Der Kanal 17 weist ebenfalls ein Drosselelement 8 auf. Durch das Zusammenspiel der drei Druckräume werden nun zwei Ausgleichsbewegungen des Gleitlagersegments ermöglicht. Zum einen kann das erste Teilelement 3 in der Aufnahmetasche 2 in vertikaler Richtung verschoben werden und eine Abstandsänderung zwischen erstem und zweiten Lagerring 1 ausgleichen. Zum anderen kann das zweite Teilelement 4 in der konkaven Wölbung des ersten Teilelements 3 gleiten und so zwischen dem ersten Teilelement 3 und dem zweiten Lagerring 1 eine geneigte Lage einnehmen und so zum Beispiel eine mögliche Verkippung zwischen erstem und zweitem Lagerring 1 ausgleichen.

Die vorstehend beschriebenen Lageranordnungen weisen einen ersten Lagerring 20 und einem drehbar gegenüber dem ersten Lagerring 20 gelagerten zweiten Lagerring 1 auf, wobei an dem ersten Lagerring 20 eine Mehrzahl von hydrostatisch abgestützten Gleitlagersegmenten 30 angeordnet ist, wobei jedes Gleitlagersegment 30 mit einer am zweiten Lagerring 1 angeordneten ersten Gleitfläche zusammenwirkt, wobei jedes Gleitlagersegment 30 ein erstes Teilelement 3 und ein zweites Teilelement 4 aufweist, wobei das erste Teilelement 3 derart in einer Aufnahmetasche 2 des ersten Lagerrings 20 aufgenommen ist, dass zwischen dem ersten Lagerring 20 und dem ersten Teilelement 3 ein erster Druckraum gebildet ist, wobei das erste Teilelement 3 und das zweite Teilelement 4 derart ausgebildet sind, dass zwischen dem ersten Teilelement 3 und dem zweiten Teilelement 4 ein zweiter Druckraum gebildet ist, wobei das zweite Teilelement 3 und der zweite Lagerring 1 so ausgebildet sind, dass zwischen dem zweiten Teilelement 4 und dem zweiten Lagerring 1 ein dritter Druckraum gebildet ist, wobei eine erste Oberfläche 5 des ersten Teilelements 3 mit einer zweiten Oberfläche 6 des zweiten Teilelements 4 zusammenwirkt, wobei die erste Oberfläche 5 konvex oder konkav gekrümmt ist und die zweite Oberfläche 6 komplementär zur ersten Oberfläche 5 geformt ist.

Bei den vorstehend beschriebenen Ausführungsbeispielen von Lageranordnungen weist der erste Druckraum eine erste hydrostatisch wirksame Projektionsfläche, der zweite Druckraum eine zweite hydrostatisch wirksame Projektionsfläche und der dritte Druckraum eine dritte hydrostatisch wirksame Projektionsfläche auf, wobei die dritte Projektionsfläche größer oder gleich der zweiten Projektionsfläche ist und die zweite Projektionsfläche größer oder gleich der ersten Projektionsfläche ist. Hierdurch kann sichergestellt, werden, dass sich zwischen dem ersten Teilelement 3 und dem zweiten Teilelement 4 immer ein Spalt einstellt.

### BEZUGSZEICHENLISTE

- 1: zweiter Lagerring
- 2: Aufnahmetasche
- 3: erstes Teilelement
- 4: zweites Teilelement
- 5: erste Oberfläche
- 6: zweite Oberfläche
- 7: Kanal
- 7': Taschenkanal
- 7": Kanal
- 8: Drossel
- 9: hydrostatische Tasche
- 10: Dichtungsring
- 11: Verdrehsicherung
- 12: Schmiermittel-Führungsrillen
- 17: Kanal
- 17': Taschenkanal
- 19: hydrostatische Tasche
- 20: erster Lagerring
- 21: Nut
- 27: Kanal
- 30: Gleitlagersegment
- R: Schnittebene
- A-A: Schnittebene
- B-B: Schnittebene

## Patentansprüche

1. Lageranordnung mit einem ersten Lagerring (20) und einem drehbar gegenüber dem ersten Lagerring (20) gelagerten zweiten Lagerring (1), wobei an dem ersten Lagerring (20) eine Mehrzahl von hydrostatisch abgestützten Gleitlagersegmenten (30) angeordnet ist, die in einer Umfangsrichtung des ersten Lagerrings (20) voneinander beabstandet sind, wobei jedes Gleitlagersegment (30) mit einer am zweiten Lagerring (1) angeordneten ersten Gleitfläche zusammenwirkt, wobei jedes Gleitlagersegment (30) ein erstes Teilelement (3) und ein zweites Teilelement (4) aufweist, wobei das erste Teilelement (3) derart in einer Aufnahmetasche (2) des ersten Lagerrings (20) aufgenommen ist, dass zwischen dem ersten Lagerring (20) und dem ersten Teilelement (3) ein erster Druckraum gebildet ist, wobei das erste Teilelement (3) und das zweite Teilelement (4) derart ausgebildet sind, dass zwischen dem ersten Teilelement (3) und dem zweiten Teilelement (4) ein zweiter Druckraum gebildet ist, wobei das zweite Teilelement (3) und der zweite Lagerring (1) so ausgebildet sind, dass zwischen dem zweiten Teilelement (4) und dem zweiten Lagerring (1) ein dritter Druckraum gebildet ist, wobei eine erste Oberfläche (5) des ersten Teilelements (3) mit einer zweiten Oberfläche (6) des zweiten Teilelements (4) zusammenwirkt, wobei die erste Oberfläche (5) konvex oder konkav gekrümmt ist und die zweite Oberfläche (6) komplementär zur ersten Oberfläche (5) geformt ist, wobei der erste Druckraum eine erste hydrostatisch wirksame Projektionsfläche, der zweite Druckraum eine zweite hydrostatisch wirksame Projektionsfläche und der dritte Druckraum eine dritte hydrostatisch wirksame Projektionsfläche aufweist, wobei die dritte Projektionsfläche größer oder gleich der zweiten Projektionsfläche ist und die zweite Projektionsfläche größer oder gleich der ersten Projektionsfläche ist und wobei der erste Druckraum in der Aufnahmetasche (2) des ersten Lagerrings (20) über eine Schmierstoffversorgung mit Druck beaufschlagbar ist, wobei der erste Druckraum und der zweite Druckraum über einen durch das erste Teilelement (3) verlaufenden Kanal (7) verbunden sind und der zweite Druckraum und der dritte Druckraum über einen durch das zweite Teilelement (4) verlaufenden Kanal (17) verbunden sind, wobei der durch das zweite Teilelement (4) verlaufenden Kanal (17) und/oder der durch das erste Teilelement (3) verlaufende Kanal (7) jeweils mindestens ein Drosselelement (8) aufweisen, die Drosselung durch eine integrierte Ölleitungsführung in dem jeweiligen Teilelement (3, 4) realisiert ist und die Ölleitung in der Form einer Spirale in den tragenden Querschnitt eingearbeitet ist.

2. Lageranordnung nach Anspruch 1, wobei die erste Oberfläche (5) kugelförmig konkav geformt ist und die zweite Oberfläche (6) kugelförmig konvex geformt ist.

3. Lageranordnung nach Anspruch 1, wobei die erste Oberfläche (5) kugelförmig konvex geformt ist und die zweite Oberfläche (6) kugelförmig konkav geformt ist.

4. Lageranordnung nach einem der vorhergehenden Ansprüche, wobei die erste Oberfläche (5) derart mit der zweiten Oberfläche (6) zusammenwirkt, dass das zweite Teilelement (4) drehbar gegenüber dem ersten Teilelement (3) gelagert ist.

5. Lageranordnung nach einem der vorhergehenden Ansprüche, wobei das zweite Teilelement (3) eine mit der ersten Gleitfläche zusammenwirkende zweite Gleitfläche aufweist, wobei die zweite Gleitfläche mindestens zwei hydrostatische Taschen (19) aufweist, die jeweils über einen, durch das zweite Teilelement (4) verlaufenden Kanal (17) mit dem zweiten Druckraum verbunden sind.

6. Lageranordnung nach einem der vorhergehenden Ansprüche, wobei die erste Oberfläche (5) und/oder die zweite Oberfläche (6) Führungsrillen (12) für ein hydrostatisches Medium aufweist.

7. Lageranordnung nach Anspruch 6, wobei die Führungsrillen (12) spiralförmig oder ringförmig oder sternförmig verlaufen.

8. Lageranordnung nach einem der vorhergehenden Ansprüche, wobei die erste Oberfläche (5) und/oder die zweite Oberfläche (6) mindestens zwei hydrostatische Taschen (9) aufweist.

9. Lageranordnung nach einem der vorhergehenden Ansprüche, wobei das erste Teilelement (3) und/oder das zweite Teilelement (4) eine Verdrehsicherung (11) aufweist, die in einer fest mit dem ersten Lagerring (20) verbundenen Nut (21) geführt ist.

10. Lageranordnung nach einem der vorhergehenden Ansprüche, wobei zwischen der Aufnahmetasche (2) des ersten Lagerrings (20) und dem ersten Teilelement (3) mindestens ein, vorzugsweise zwei Dichtungselemente (10) angeordnet sind.

11. Lageranordnung nach einem der vorhergehenden Ansprüche, wobei die Lageranordnung mindestens eine Wälzkörperreihe mit mehreren Wälzkörpern aufweist, die an einer ersten Laufbahn des ersten Lagerrings (20) und an einer zweiten Laufbahn des zweiten Lagerrings (1) abrollbar angeordnet sind.

## Claims

1. Bearing arrangement having a first bearing ring (20) and a second bearing ring (1), which is mounted in a rotatable manner in relation to the first bearing ring (20), wherein the first bearing ring (20) has arranged on it a plurality of hydrostatically supported sliding-bearing segments (30), which are spaced apart from one another in a circumferential direction of the first bearing ring (20), wherein each sliding-bearing segment (30) interacts with a first sliding surface, which is arranged on the second bearing ring (1), wherein each sliding-bearing segment (30) has a first sub-element (3) and a second sub-element (4), wherein the first sub-element (3) is received in a receptacle pocket (2) of the first bearing ring (20) such that a first compression chamber is formed between the first bearing ring (20) and the first sub-element (3), wherein the first sub-element (3) and the second sub-element (4) are designed such that a second compression chamber is formed between the first sub-element (3) and the second sub-element (4), wherein the second sub-element (3) and the second bearing ring (1) are designed such that a third compression chamber is formed between the second sub-element (4) and the second bearing ring (1), wherein a first surface (5) of the first sub-element (3) interacts with a second surface (6) of the second sub-element (4), wherein the first surface (5) is curved convexly or concavely and the second surface (6) is formed in a manner complementary to the first surface (5), wherein the first compression chamber has a first hydrostatically active projection surface, the second compression chamber has a second hydrostatically active projection surface and the third compression chamber has a third hydrostatically active projection surface, wherein the third projection surface is greater than or equal to the second projection surface and the second projection surface is greater than or equal to the first projection surface, and wherein the first compression chamber in the receptacle pocket (2) of the first bearing ring (20) can be subjected to pressure via a lubricant supply, wherein the first compression chamber and the second compression chamber are connected via a duct (7) running through the first sub-element (3), and the second compression chamber and the third compression chamber are connected via a duct (17) running through the second sub-element (4), wherein the duct (17) running through the second sub-element (4) and/or the duct (7) running through the first sub-element (3) have/has in each case at least one throttling element (8), the throttling is realized by way of an integrated oil-line routing in the respective sub-element (3, 4), and the oil line is incorporated in the form of a coil in the supporting cross section.

2. Bearing arrangement according to Claim 1, wherein the first surface (5) is spherically concave and the second surface (6) is spherically convex.

3. Bearing arrangement according to Claim 1, wherein the first surface (5) is spherically convex and the second surface (6) is spherically concave.

4. Bearing arrangement according to one of the preceding claims, wherein the first surface (5) interacts with the second surface (6) such that the second sub-element (4) is mounted in a rotatable manner in relation to the first sub-element (3).

5. Bearing arrangement according to one of the preceding claims, wherein the second sub-element (3) has a second sliding surface, which interacts with the first sliding surface, wherein the second sliding surface has at least two hydrostatic pockets (19), which are connected to the second compression chamber in each case via a duct (17) running through the second sub-element (4) .

6. Bearing arrangement according to one of the preceding claims, wherein the first surface (5) and/or the second surface (6) have/has guide grooves (12) for a hydrostatic medium.

7. Bearing arrangement according to Claim 6, wherein the guide grooves (12) run in a coil-shaped or annular or star-shaped manner.

8. Bearing arrangement according to one of the preceding claims, wherein the first surface (5) and/or the second surface (6) have/has at least two hydrostatic pockets (9).

9. Bearing arrangement according to one of the preceding claims, wherein the first sub-element (3) and/or the second sub-element (4) have/has a rotation-prevention means (11), which is guided in a recess (21) which is connected firmly to the first bearing ring (20).

10. Bearing arrangement according to one of the preceding claims, wherein at least one sealing element (10) is arranged, preferably two sealing elements (10) are arranged, between the receptacle pocket (2) of the first bearing ring (20) and the first sub-element (3).

11. Bearing arrangement according to one of the preceding claims, wherein the bearing arrangement has at least one row of rolling bodies having a plurality of rolling bodies, which are arranged for rolling action on a first raceway of the first bearing ring (20) and on a second raceway of the second bearing ring (1).

## Revendications

1. Ensemble palier comportant une première bague de palier (20) et une deuxième bague de palier (1) montée rotative par rapport à la première bague de palier (20), une pluralité de segments de palier lisse (30) supportés de manière hydrostatique étant disposés sur la première bague de palier (20), lesquels sont espacés les uns des autres dans une direction périphérique de la première bague de palier (20), chaque segment de palier lisse (30) coopérant avec une première surface de glissement disposée sur la deuxième bague de palier (1), chaque segment de palier lisse (30) comprenant un premier élément partiel (3) et un deuxième élément partiel (4), le premier élément partiel (3) étant logé dans une cavité de réception (2) de la première bague de palier (20) de telle sorte qu'un premier espace de pression est formé entre la première bague de palier (20) et le premier élément partiel (3), le premier élément partiel (3) et le deuxième élément partiel (4) étant réalisés de telle sorte qu'un deuxième espace de pression est formé entre le premier élément partiel (3) et le deuxième élément partiel (4), le deuxième élément partiel (3) et la deuxième bague de palier (1) étant réalisés de telle sorte qu'un troisième espace de pression est formé entre le deuxième élément partiel (4) et la deuxième bague de palier (1), une première surface (5) du premier élément partiel (3) coopérant avec une deuxième surface (6) du deuxième élément partiel (4), la première surface (5) étant de courbure convexe ou concave et la deuxième surface (6) étant formée de manière complémentaire à la première surface (5), le premier espace de pression comprenant une première surface de projection agissant de manière hydrostatique, le deuxième espace de pression comprenant une deuxième surface de projection agissant de manière hydrostatique et le troisième espace de pression comprenant une troisième surface de projection agissant de manière hydrostatique, la troisième surface de projection étant supérieure ou égale à la deuxième surface de projection et la deuxième surface de projection étant supérieure ou égale à la première surface de projection, et le premier espace de pression dans la cavité de réception (2) de la première bague de palier (20) pouvant être soumis à une pression par le biais d'une alimentation en lubrifiant, le premier espace de pression et le deuxième espace de pression étant reliés par le biais d'un canal (7) s'étendant à travers le premier élément partiel (3) et le deuxième espace de pression et le troisième espace de pression étant reliés par le biais d'un canal (17) s'étendant à travers le deuxième élément partiel (4), le canal (17) s'étendant à travers le deuxième élément partiel (4) et/ou le canal (7) s'étendant à travers le premier élément partiel (3) comprenant respectivement au moins un élément d'étranglement (8), l'étranglement étant réalisé par un cheminement de conduite d'huile intégré dans l'élément partiel (3, 4) respectif et la conduite d'huile étant ménagée sous la forme d'une spirale dans la section transversale porteuse.

2. Ensemble palier selon la revendication 1, la première surface (5) étant formée de manière concave de façon sphérique et la deuxième surface (6) étant formée de manière convexe de façon sphérique.

3. Ensemble palier selon la revendication 1, la première surface (5) étant formée de manière convexe de façon sphérique et la deuxième surface (6) étant formée de manière concave de façon sphérique.

4. Ensemble palier selon l'une des revendications précédentes, la première surface (5) coopérant avec la deuxième surface (6) de telle sorte que le deuxième élément partiel (4) est monté rotatif par rapport au premier élément partiel (3).

5. Ensemble palier selon l'une des revendications précédentes, le deuxième élément partiel (3) comprenant une deuxième surface de glissement coopérant avec la première surface de glissement, la deuxième surface de glissement comprenant au moins deux cavités hydrostatiques (19) qui sont reliées au deuxième espace de pression respectivement par le biais d'un canal (17) s'étendant à travers le deuxième élément partiel (4).

6. Ensemble palier selon l'une des revendications précédentes, la première surface (5) et/ou la deuxième surface (6) comprenant des rainures de guidage (12) pour un milieu hydrostatique.

7. Ensemble palier selon la revendication 6, les rainures de guidage (12) s'étendant en forme de spirale ou en forme d'anneau ou en forme d'étoile.

8. Ensemble palier selon l'une des revendications précédentes, la première surface (5) et/ou la deuxième surface (6) comprenant au moins deux cavités hydrostatiques (9).

9. Ensemble palier selon l'une des revendications précédentes, le premier élément partiel (3) et/ou le deuxième élément partiel (4) comprenant une fixation antirotation (11) qui est guidée dans une gorge (21) reliée fixement à la première bague de palier (20).

10. Ensemble palier selon l'une des revendications précédentes, au moins un, de préférence deux éléments d'étanchéité (10) étant disposés entre la cavité de réception (2) de la première bague de palier (20) et le premier élément partiel (3).

11. Ensemble palier selon l'une des revendications précédentes, l'ensemble palier comprenant au moins une rangée de corps de roulement dotée de plusieurs corps de roulement qui sont disposés de manière à pouvoir rouler sur un premier chemin de roulement de la première bague de palier (20) et sur un deuxième chemin de roulement de la deuxième bague de palier (1).
